# EUROPEAN PATENT APPLICATION

(11) **EP 4 534 278 A1**
(43) Date of publication of application: **09.04.2025**
(21) Application number: 23201777.2
(22) Date of filing: 05.10.2023
(51) Int. Cl.: B30B 9/30, B30B 15/00, F16P 7/00, F16P 7/02

(54) **BALER COMPRISING A SAFETY SYSTEM**

(71) Applicant: Bramidan A/S, 6740 Bramming (DK)
(72) Inventor: Christensen, Ejnar C., 6740 Bramming (DK); Pilgaard, Daniel, 6740 Bramming (DK)
(74) Representative: Zacco Denmark A/S

(57) **Abstract**

Disclosed is a baler (100, 200) for making bales of a waste material. The baler comprises a compaction compartment (102, 202), a door (104, 204), door movement means (106, 206), and a frame part (108, 208). The frame part comprises at least one receiving means (110, 210). The baler comprises a safety system (112, 212). The safety system comprises a safety arm (114, 214) configured to be connected to the door movement means, latching means (116, 216) connected to the safety arm and configured for moving between a first position (118, 218) allowing the door to move and a second position (120, 220) preventing the door from moving by engaging into the at least one receiving means, and equilibrium means (122, 222) connected to the safety arm and configured for moving the latching means from the first position to the second position when the door movement means is interrupted.

## Description

The invention relates to a baler comprising a safety system.

### Background

The use of cardboard boxes, plastic bags, plastic wrapping and the like for packaging, storage and transporting of e.g. food products and staple goods is widely known in the industry. After use of the storage and packaging materials, they are normally disposed or recycled. For an easy handling of these waste products, balers are commonly used to create compacted bales by pressing all extra air inside e.g. the cardboard out. Balers normally comprise a compaction compartment with a press plate that compacts the waste product placed therein. The waste product is placed in the compaction compartment through a door located at an upper part of the baler. After closing this door, the press plate may be activated, whereby it compacts the waste product by pressing the product from one end of the compaction compartment towards an opposite end of the compaction compartment. The compacted bale of waste material can subsequently be subtracted from a second door placed at a lower part of the baler.

The upper door for depositing the waste into the baler can be opened in different ways, e.g. manually or automatically. Normally, the door would be open the majority of the time, such that waste product may be placed in the compartment. When the waste product is to be compacted, the door must be closed. Upon closing the door or if the mechanism that normally provides that the door is open fails, there is a risk that the user can get his/hers hand caught by the door, if e.g. he/she tries to put in or remove extra waste as the door is closing. As there is an increasing focus on safety at working places, these commonly used upper doors can be problematic. One way to solve this problem in the prior art has been to provide a lock which then needs to be released or unlocked prior to closing the door. However, such locks may be cumbersome for the user to operate. Furthermore, the use of such a lock may not prevent all accidents, such as if the user tries to put in or remove extra waste as the door is closing.

Thus, it remains a problem to provide a safety system for a baler.

### Summary

Disclosed herein is a baler for making bales of a waste material, such as e.g. cardboard or plastic, by compacting the waste material. The baler comprises a compaction compartment for containing the waste to be compacted. The baler comprises a door being configured for providing access to the compaction compartment. The baler comprises door movement means configured for moving the door. The baler comprises a frame part configured for surrounding at least part of the door. The frame part comprises at least one receiving means. The baler comprises a safety system. The safety system comprises a safety arm configured to be connected to the door movement means. The safety system comprises latching means connected to the safety arm and configured for moving between a first position allowing the door to move and a second position preventing the door from moving by engaging into the at least one receiving means. The safety system comprises equilibrium means connected to the safety arm and configured for moving the latching means from the first position to the second position when the door movement means is interrupted.

By the above, is thereby obtained a baler comprising a safety system, which can prevent the door from closing or from closing completely when the door movement means is interrupted. Hence, accidents involving a user getting his/her hand caught by the door due to malfunctions of the baler may be avoided. Thus, it is an advantage that a reliable and robust safety system is provided that may reduce or eliminate accidents when operating a baler. Furthermore, it is an advantage that the safety system as disclosed eliminates the need for a lock and that the user is therefore not required to release the lock prior to closing of the door. Furthermore, it is an advantage that a versatile safety system is provided that may be adapted to specific requirements of the baler or of the operation of the baler.

The baler comprises a compaction compartment for containing the waste to be compacted. The baler comprises a door being configured for providing access to the compaction compartment. The door may be configured for opening and closing. The door may be configured for moving vertically, i.e. up and/or down, such as predominantly vertically, to provide access to the compaction compartment. The door may be configured for also moving horizontally at the beginning or end of opening and/or closing of the door, such that the door moves in an L-shaped curve when opening and closing when viewed from the side. The waste may be e.g. cardboard or plastic. The waste may be placed in the compaction compartment through or via the door. The door may be located at an upper part of the baler.

The baler comprises door movement means configured for moving the door, such as for moving the door when it opens and/or closes. The door movement means may be configured for moving the door upwards and downwards in a vertical, such as predominantly vertical, direction. The door movement means may be connected to the door. The door movement means may be connected to a gear, toothed gears, a gear wheel, a sprocket, a sprocket-wheel or a chainwheel provided in/on or at the baler. The door movement means may be connected to a wire winder provided in/on or at the baler. The door movement means may be connected to a weight, such as a counterweight, provided in/on or at the baler. The door movement means may provide power transfer which causes movement of the door, such as a translatory movement of the door in the vertical direction, i.e. up and/or down or upwards and/or downwards.

The baler comprises a frame part configured for surrounding at least part of the door and comprising at least one receiving means. The frame part may be configured for enclosing or surrounding or supporting at least part of the door. The frame part may comprise two or more bars, rails or studs. The receiving means may be a cavity or an opening in the frame part. Alternatively, or additionally, the receiving means may be a protrusion protruding or projecting from the frame part. Alternatively, or additionally, the receiving means may be a plate or a pin, the plate or pin may be arranged in an opening of the frame part or the plate or pin may protrude or project from the frame part.

The baler comprises a safety system. The safety system comprises a safety arm configured to be connected to the door movement means. The safety system comprises latching means, such as connection means or engagement means or fastening means or securing means or anchoring means. The latching means is connected to the safety arm. The latching means is configured for moving between a first position allowing the door to move and a second position preventing the door from moving by engaging into or onto the at least one receiving means. Thus, in other words, the latching means may be configured for being received or caught by one of the at least one receiving means in the second position. Correspondingly, the at least one receiving means may be configured for receiving or catching the latching means in the second position.

The safety system comprises equilibrium means connected to the safety arm and configured for moving the latching means from the first position to the second position when the door movement means is interrupted. The door movement means may be interrupted if the door movement means is broken, torn or discontinued.

In one or more embodiments, the safety arm is connected to the door movement means when the latching means is in the first position. In one or more embodiments, the safety arm is not connected to the door movement means when the latching means is in the second position.

In one or more embodiments, a first force is acting on the safety arm due to the safety arm being connected to the door movement means and a second force is acting on the safety arm due to the equilibrium means being connected to the safety arm. Thus, the first force may be acting on the safety arm when the latching means is in the first position. In one or more embodiment, the first force is balanced by the second force, such as the first and second force is in equilibrium, when the latching means is in the first position. This balance or equilibrium may be broken or disrupted when the door movement means is interrupted, because the first force may then no longer be acting on the safety arm.

In one or more embodiments, the safety arm is configured to be pivotable around a point along an axis in which the safety arm extends. Thus, the safety arm may be pivotable around said point when the latching means is moving from the first position to the second position.

Alternatively, the latching means may be configured for moving between the first position and the second position in a translatory motion. In other words, the latching means may be configured for moving between the first position and the second position without any change in an orientation of the safety arm. Additionally, the latching means may be configured for moving between the first position and the second position in a substantially horizontal manner or in a substantially horizontal plane. In this embodiment, the safety arm may be configured to be connected to the door movement means via the latching means.

In one or more embodiments, the safety system is provided on the door, such as provided in/at the door. The safety system may be provided at a first end or side of the door. The safety system may be a first safety system. The baler may comprise a second safety system. The second safety system may comprise identical features to that of the first safety system, and the second safety system may be configured to be provided at a second end or side of the door, the second end or side being opposite to the first end or side of the door.

In one or more embodiments, the door movement means is provided within or in the frame part, such as least partly within or in the frame part.

In one or more embodiments, the frame part comprises two or more receiving means, the two or more receiving means provided at different heights in the frame part. The height may be defined as starting from one end, such as a button, of the frame part, or may be defined as starting from the ground. Hereby, the door may be prevented from closing or from closing completely at different heights or positions.

In one or more embodiments, the door movement means is a chain, a wire, a rope, a belt, such as a toothed belt, timing belt or gear belt, or a strap.

In one or more embodiments, the latching means is a catch, a protrusion, a latch, a fork, a pin or a hook.

In one or more embodiments, the equilibrium means is a counterweight, a switch, a spring such as a mechanical spring, a gas spring compression spring, or a pneumatic system or device.

In one or more embodiments, the safety arm is configured to be connected to the door movement means via a hook, a ring, a bolt, a gear wheel, a fork or a pin. In one or more embodiments, the safety arm is configured to be connected to the door movement means via the latching means.

In one or more embodiments, the door is configured to be closed manually by a user. Thus, the user may move, close or press or pull the door downwards to manually close the door. Alternatively, the door is configured to close automatically.

In one or more embodiments, the baler comprises a press plate or a ram configured for compacting the waste. The press plate may be a hydraulic press plate.

In one or more embodiments, the baler is a vertical baler. Thus, the press plate may move vertically inside the compression compartment, thereby compacting the waste vertically by pressing down on the waste.

In a preferred embodiment, the baler comprises, a compaction compartment for containing the waste to be compacted, a door being configured for providing access to the compaction compartment, a chain configured for moving the door, a frame part configured for surrounding at least part of the door and comprising at least one cavity and a safety system. In the preferred embodiment, the safety system comprises a safety arm configured to be connected to the chain, a catch connected to the safety arm and configured for moving between a first position allowing the door to move and a second position preventing the door from moving by engaging into the at least one cavity, and a spring connected to the safety arm and configured for moving the catch from the first position to the second position when the chain is interrupted.

### Brief description of the drawings

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

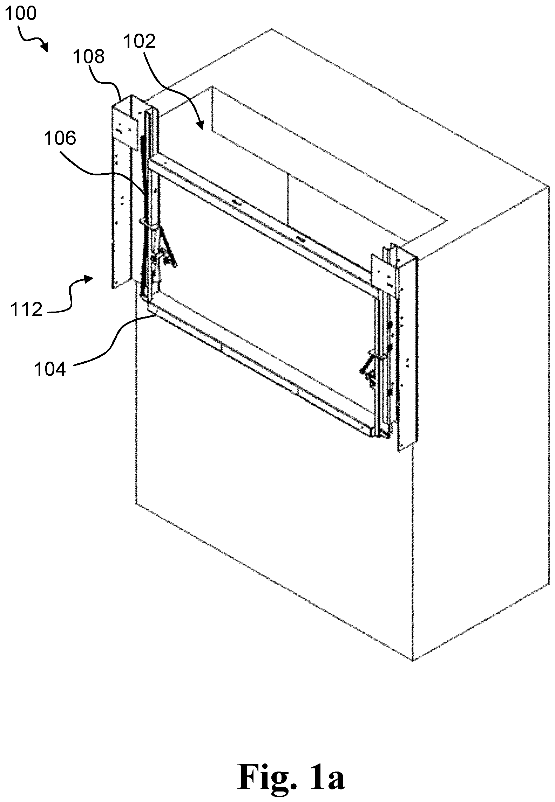

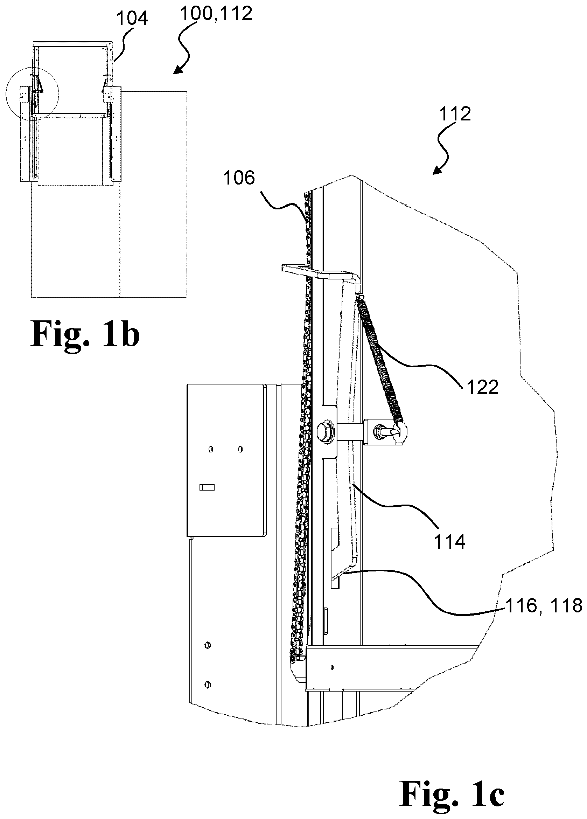

Figures 1- 5 schematically illustrate an exemplary baler comprising a safety system.

### Description of examples

Figures 1a-1c schematically illustrate an exemplary baler 100 comprising a safety system 112. Figure 1a and 1b shows an overview of the baler 100 comprising the safety system 112, while the circle in figure 1b marks a close-up view, shown in figure 1c. The baler 100 for making bales of a waste material, such as e.g. cardboard or plastic, by compacting the waste material, comprises a compaction compartment 102 for containing the waste to be compacted. The baler 100 comprises a door 104 being configured for providing access to the compaction compartment. The baler 100 comprises door movement means 106 configured for moving the door. Figure 1a shows the door 104 closed, while figure 1b shows the door 104 open. The baler comprises a frame part 108 configured for surrounding at least part of the door and comprising at least one receiving means (not shown).

The baler 100 comprises a safety system 112. The safety system 112 comprises a safety arm 114 configured to be connected to the door movement means 106. The safety system 112 comprises latching means 116 connected to the safety arm 114 and configured for moving between a first position 118 allowing the door to move and a second position (not shown) preventing the door 104 from moving by engaging into the at least one receiving means (not shown). The safety system 112 comprises equilibrium means 122 connected to the safety arm 114 and configured for moving the latching means 116 from the first position 118 to the second position (not shown) when the door movement means 106 is interrupted. Figures 1a-1c show the latching means 116 in the first position 118, the first position 118 allowing the door 104 to move.

Figures 1a-c shows that the safety system 112 is provided on the door 104. Furthermore, the door movement means 106 is shown as being provided within or in the frame part 108.

In one or more embodiments, the baler 110 comprises a press plate (not shown) configured for compacting the waste. In one or more embodiments, the baler 100 is a vertical baler. In one or more embodiments, the door 104 is configured to be closed automatically or manually by a user.

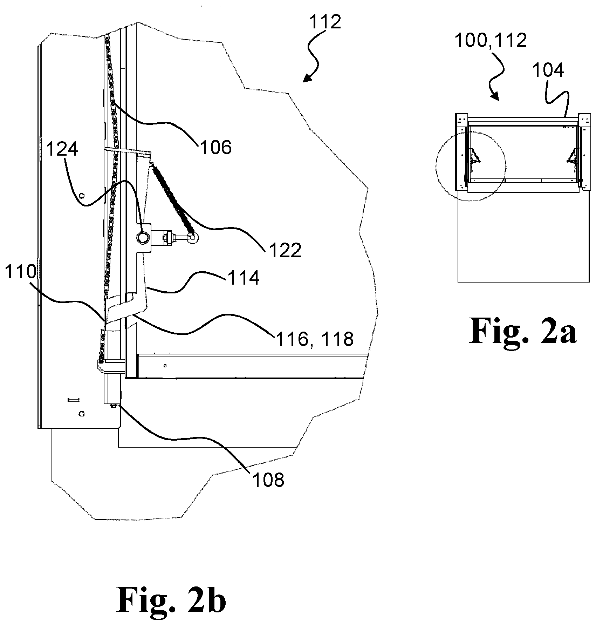

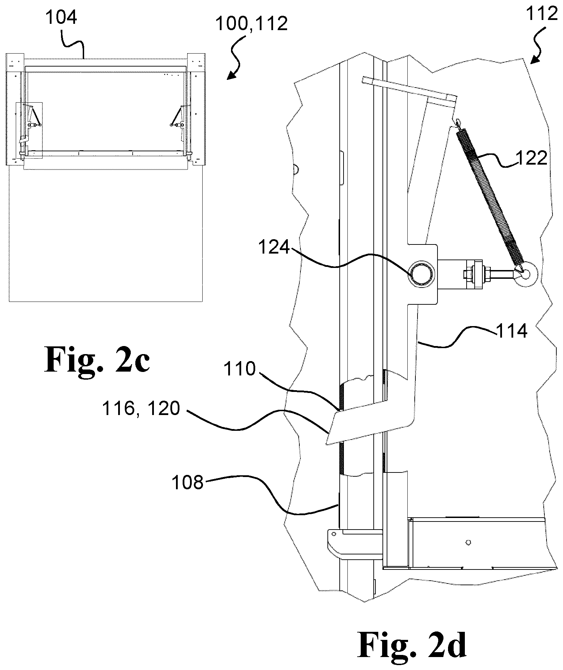

Figures 2a-d schematically illustrate an exemplary baler 100 comprising a safety system 112. The baler comprises a door 104. Figures 2a-b shows the safety system 112 with latching means 116 in a first position 118, the first position 118 allowing the door 104 to move. Figures 2c-d shows the safety system 112 with latching means in a second position 120, the second position 120 preventing the door 104 from moving. In figure 2a, the circle marks a close-up and cross-sectional view, shown in figure 2b. In figure 2c, the box marks a close-up and cross-sectional view shown in figure 2d.

Figure 2b and 2d show that the frame part 108 configured for surrounding at least part of the door comprises one receiving means 110. In one or more embodiments, the frame part 108 comprises two or more receiving means 110. In figure 2b and 2d, the receiving means 110 is shown as an opening or cavity in the frame part 108. Furthermore, the latching means 116 is shown as a catch. Alternatively, the latching means 116 may be a protrusion, a latch, a fork or a hook. In figure 2b, the door movement means 106 is shown as a chain.

Figure 2d shows that the door movement means (shown in figure 2b) is interrupted, such as the door movement means may have been broken, torn or discontinued. Thus, the latching means 116 is shown in the second position 120 preventing the door 104 from moving by engaging into the at least one receiving means 110.

The equilibrium means 122, shown as a spring in figures 2a-d, is connected to the safety arm 114 and is configured for moving the latching means 116 from the first position 118 (shown in figure 2b) to the second position 120 (shown in figure 2d) when the door movement means 106 is interrupted. In the first position 118, a first force is acting on the safety arm 114 due to the safety arm 114 being connected to the door movement means 106 and a second force is acting on the safety arm 114 due to the equilibrium means 122 being connected to the safety arm 114. In the first position 118, the first force is balanced by the second force. This balance may be broken or disrupted when the door movement means 106 is interrupted, because the first force may then no longer be acting on the safety arm 114.

Figure 2b shows that the safety arm 114 is connected to the door movement means 106 when the latching means 116 is in the first position 118. Figure 2d shows that the safety arm 114 is not connected to the door movement means 106 when the latching means 116 is in the second position 120.

Figure 2a-d shows that the safety arm 114 is configured to be pivotable around a point 124 along an axis in which the safety arm 114 extends. Thus, the safety arm 114 is shown as being pivotable around said point 124 when the latching means 116 is moving from the first position 118 (shown in figure 2b) to the second position 120 (shown in figure 2d).

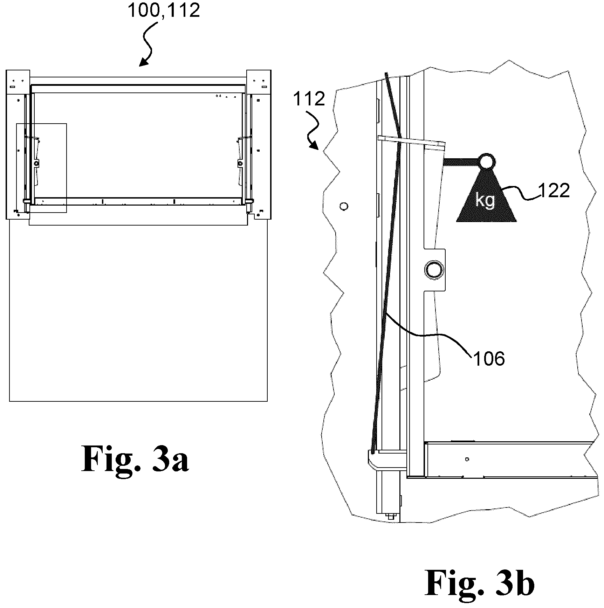

Figure 3a-b schematically illustrate an exemplary baler 100 comprising a safety system 112. In figure 3a, the box marks a close-up view, shown in figure 3b. In figure 3b, the door movement means 106 is shown as a wire and the equilibrium means 122 is shown as a counterweight. Alternatively, the door movement means 106 may be a chain, a rope, a belt, or a strap, and/or the equilibrium means 122 may be a switch or a spring.

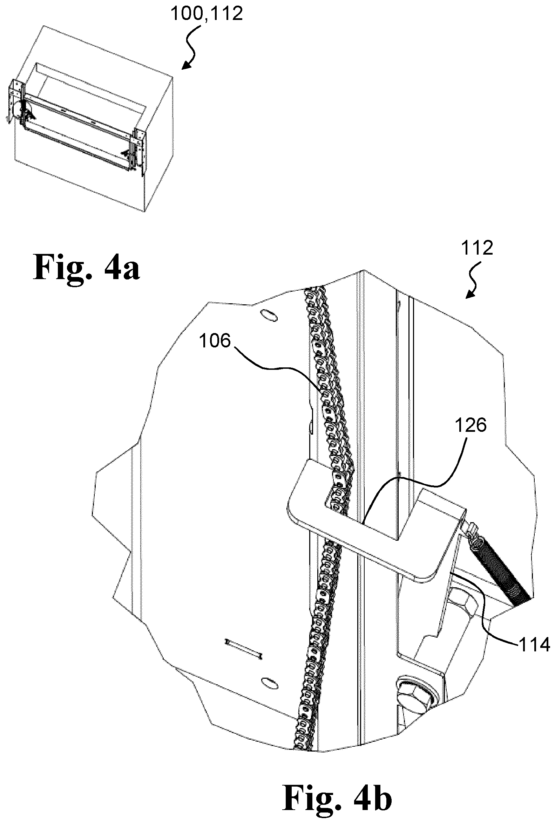

Figure 4a-b schematically illustrate an exemplary baler 110 comprising a safety system 112. In figure 4a-b, the viewing angle is tilted compared to e.g. figure 2a-b, such that the baler 110 is viewed from above from an angle. In figure 4a, the circle marks a close-up view, shown in figure 4b. Figure 4b shows that the safety arm 114 is configured to be connected to the door movement means 106 via a hook 126. Alternatively, the safety arm 114 may be configured to be connected to the door movement means 106 via a ring, a bolt, a gear wheel, a fork or a pin.

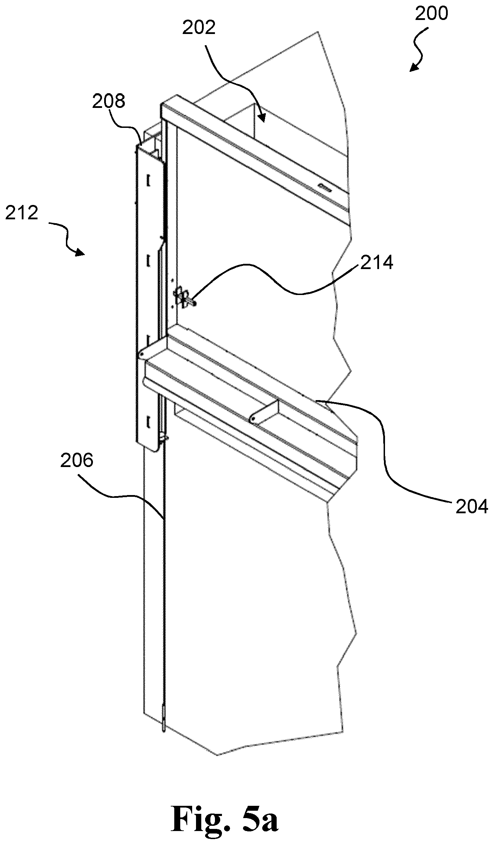

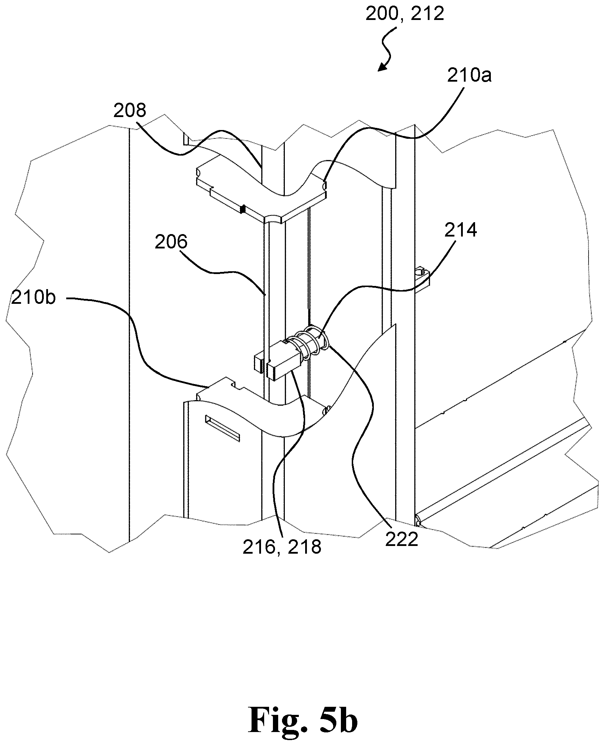

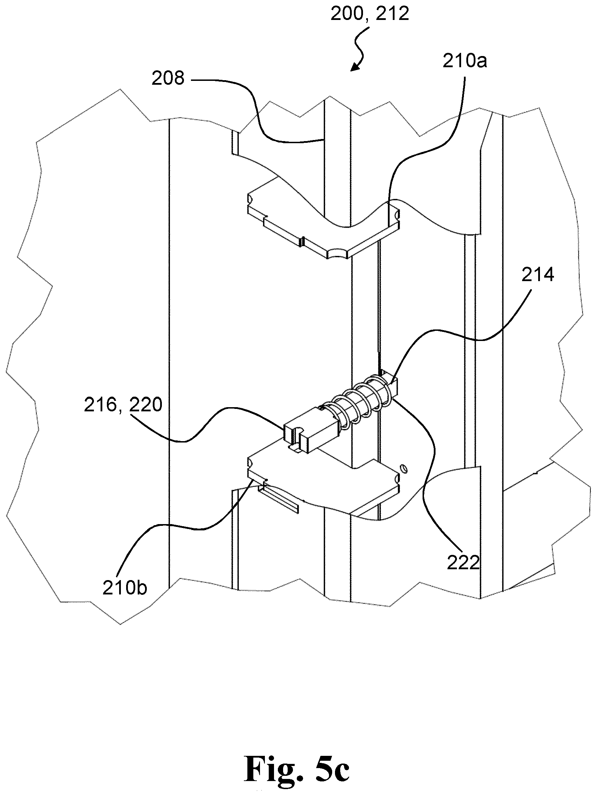

Figures 5a-c schematically illustrate an exemplary baler 200 comprising a safety system 212. The figures show only a part or a section of the baler 200. The baler 200 comprises a compaction compartment 202 and a door 204 being configured for providing access to the compaction compartment 202. The baler 200 comprises door movement means 206 configured for moving the door 204. The baler 200 comprises a frame part 208 configured for surrounding at least part of the door 204 and comprising at least one receiving means 210. The safety system 212 comprises a safety arm 214 configured to be connected to the door movement means 206. The safety system 212 comprises latching means 216 connected to the safety arm 214 and configured for moving between a first position 218 allowing the door 204 to move and a second position 220 preventing the door 204 from moving by engaging onto the at least one receiving means 210. The safety system 212 comprises equilibrium means 222 connected to the safety arm 214 and configured for moving the latching means 216 from the first position 218 to the second position 220 when the door movement means 206 is interrupted. Figures 5a and 5b show the latching means 216 in the first position 218, the first position allowing the door to move. Figure 5c shows the latching means 216 in the second position 220, the second position 220 preventing the door 204 from moving.

Figures 5a-c shows that the safety system 212 is provided on the door 204. Furthermore, the door movement means 206 is shown as a wire, and the wire is shown as being provided within or in the frame part 208. Figures 5b-c shows a view with a cut-out in the frame part 208. The latching means 216 is shown as a fork. In this embodiment, the safety arm 214 is configured to be connected to the door movement means 206 via the latching means 216. The equilibrium means 222 is shown as a spring. Figure 5b-c shows that the frame part 208 configured for surrounding at least part of the door 204 comprises two receiving means 210a, 21 0b, the receiving means 210a, 210b are provided at different heights in the frame part 208. The receiving means 210a, 210b are shown as plates.

Figure 5c shows that the door movement means 206 is interrupted, such as the door movement means 206 may have been broken, torn or discontinued. Thus, the latching means 216 is shown in the second position 220 preventing the door from moving by engaging onto the at least one receiving means 210.

The equilibrium means 222, shown as a spring in figures 5b-c, is connected to the safety arm 214 and is configured for moving the latching means 216 from the first position 218 (shown in figure 5b) to the second position 220 (shown in figure 5c) when the door movement means 206 is interrupted. In the first position 218, a first force is acting on the safety arm 214 due to the safety arm 214 being connected to the door movement means 206 and a second force is acting on the safety arm 214 due to the equilibrium means 222 being connected to the safety arm 214. In the first position 218, the first force is balanced by the second force. This balance may be broken or disrupted when the door movement means 206 is interrupted, because the first force may then no longer be acting on the safety arm 214.

Figure 5b shows that the safety arm 214 is connected to the door movement means 206 when the latching means 216 is in the first position 218. Figure 5b also shows that in this embodiment, the safety arm 214 is configured to be connected to the door movement means 206 via the latching means 216. Figure 5c shows that the safety arm 214 is not connected to the door movement means 206 when the latching means 216 is in the second position 220.

Figure 5a-c shows that the latching means 216 is be configured for moving between the first 218 position and the second position 220 in a translatory motion. In other words, the latching 216 means may be configured for moving between the first position 218 and the second position 220 without any change in an orientation of the safety arm 214. Additionally, Figure 5a-c shows that the latching means 216 is configured for moving between the first position 218 and the second position 220 in a substantially horizontal manner or in a substantially horizontal plane.

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings. For example, in the case where a device illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described.

Throughout the specification, when an element is referred to as being "connected" to another element, the element is "directly connected" to the other element, or "electrically connected" to the other element with one or more intervening elements interposed therebetween.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

Exemplary examples are described herein with reference to cross section illustrations that are schematic illustrations of idealized examples, wherein like reference numerals refer to like elements throughout the specification. As such, variations from the shapes of the illustrations as a result, for example, of manufacturing techniques and/or tolerances, are to be expected. Thus, examples described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts which are not associated with the description may not be provided in order to specifically describe exemplary examples of the present disclosure.

The invention is further described in the following items:
1. A baler for making bales of a waste material, such as e.g. cardboard or plastic, by compacting the waste material, the baler comprising:
   - a compaction compartment for containing the waste to be compacted;
   - a door being configured for providing access to the compaction compartment;
   - door movement means configured for moving the door;
   - a frame part configured for surrounding at least part of the door and comprising at least one receiving means;
   - a safety system comprising:
      ∘ a safety arm configured to be connected to the door movement means;
      ∘ latching means connected to the safety arm and configured for moving between;
         ▪ a first position allowing the door to move; and
         ▪ a second position preventing the door from moving by engaging into the at least one receiving means; and
      ∘ equilibrium means connected to the safety arm and configured for moving the latching means from the first position to the second position when the door movement means is interrupted.
2. The baler according to item 1, wherein the safety arm is connected to the door movement means when the latching means is in the first position; and wherein the safety arm is not connected to the door movement means when the latching means is in the second position.
3. The baler according to any of the preceding items, wherein a first force is acting on the safety arm due to the safety arm being connected to the door movement means; a second force is acting on the safety arm due to the equilibrium means being connected to the safety arm; and wherein the first force is balanced by the second force when the latching means is in the first position.
4. The baler according to any of the preceding items, wherein the safety arm is configured to be pivotable around a point along an axis in which the safety arm extends.
5. The baler according to any of the preceding items, wherein the safety system is provided on the door.
6. The baler according to any of the preceding items, wherein the door movement means is provided within the frame part.
7. The baler according to any of the preceding items, wherein the frame part comprises two or more receiving means, the two or more receiving means provided at different heights in the frame part.
8. The baler according to any of the preceding items, wherein the door movement means is a chain, a wire, a rope, a belt, or a strap.
9. The baler according to any of the preceding items, wherein the latching means is a catch, a protrusion, a latch, a fork, a pin or a hook.
10. The baler according to any of the preceding items, wherein the equilibrium means is a counterweight, a switch, a spring.
11. The baler according to any of the preceding items, wherein the safety arm is configured to be connected to the door movement means via a hook, a ring, a bolt, a gear wheel, a fork or a pin.
12. The baler according to any of the preceding items, wherein the baler is a vertical baler.
13. The baler according to any of the preceding items, wherein the door is configured to be closed manually by a user.
14. The baler according to any of the preceding items, wherein the baler comprises a press plate configured for compacting the waste.
15. A baler for making bales of a waste material, such as e.g. cardboard or plastic, by compacting the waste material in a chamber, the baler comprising:
   - a compaction compartment for containing the waste to be compacted;
   - a door being configured for providing access to the compaction compartment;
   - a chain configured for moving the door;
   - a frame part configured for surrounding at least part of the door and comprising at least one cavity;
   - a safety system comprising:
      ∘ a safety arm configured to be connected to the chain;
      ∘ a catch connected to the safety arm and configured for moving between;
         ▪ a first position allowing the door to move; and
         ▪ a second position preventing the door from moving by engaging into the at least one cavity; and
      ∘ a spring connected to the safety arm and configured for moving the catch from the first position to the second position when the chain is interrupted.

### References

- 100: Baler
- 102: compaction compartment
- 104: door
- 106: door movement means
- 108: frame part
- 110: receiving means
- 112: safety system
- 114: safety arm
- 116: latching means
- 118: first position
- 120: second position
- 122: equilibrium means
- 124: point
- 126: hook
- 200: Baler
- 202: compaction compartment
- 204: door
- 206: door movement means
- 208: frame part
- 210: receiving means
- 212: safety system
- 214: safety arm
- 216: latching means
- 218: first position
- 220: second position
- 222: equilibrium means

## Claims

1. A baler (100, 200) for making bales of a waste material, such as e.g. cardboard or plastic, by compacting the waste material, the baler (100, 200) comprising:
- a compaction compartment (102, 202) for containing the waste to be compacted;
- a door (104, 204) being configured for providing access to the compaction compartment (102, 202);
- door movement means (106, 206) configured for moving the door;
- a frame part (108, 208) configured for surrounding at least part of the door (104, 204) and comprising at least one receiving means (110, 210);
- a safety system (112, 212) comprising:
∘ a safety arm (114, 214) configured to be connected to the door movement means (106, 206);
∘ latching means (116, 216) connected to the safety arm (114, 214) and configured for moving between;
▪ a first position (118, 218) allowing the door (104, 204) to move; and
▪ a second position (120, 220) preventing the door (104, 204) from moving by engaging into the at least one receiving means (110, 210); and
∘ equilibrium means (122, 222) connected to the safety arm (114, 214) and configured for moving the latching means (116, 216) from the first position (118, 218) to the second position (120, 220) when the door movement means (106, 206) is interrupted.

2. The baler according to claim 1, wherein the safety arm is connected to the door movement means when the latching means is in the first position; and wherein the safety arm is not connected to the door movement means when the latching means is in the second position.

3. The baler according to any of the preceding claims, wherein a first force is acting on the safety arm due to the safety arm being connected to the door movement means; a second force is acting on the safety arm due to the equilibrium means being connected to the safety arm; and wherein the first force is balanced by the second force when the latching means is in the first position.

4. The baler according to any of the preceding claims, wherein the safety arm is configured to be pivotable around a point along an axis in which the safety arm extends.

5. The baler according to any of the preceding claims, wherein the safety system is provided on the door.

6. The baler according to any of the preceding claims, wherein the door movement means is provided within the frame part.

7. The baler according to any of the preceding claims, wherein the frame part comprises two or more receiving means, the two or more receiving means provided at different heights in the frame part.

8. The baler according to any of the preceding claims, wherein the door movement means is a chain, a wire, a rope, a belt, or a strap.

9. The baler according to any of the preceding claims, wherein the latching means is a catch, a protrusion, a latch, a fork, a pin or a hook.

10. The baler according to any of the preceding claims, wherein the equilibrium means is a counterweight, a switch, a spring.

11. The baler according to any of the preceding claims, wherein the safety arm is configured to be connected to the door movement means via a hook, a ring, a bolt, a gear wheel, a fork or a pin.

12. The baler according to any of the preceding claims, wherein the baler is a vertical baler.

13. The baler according to any of the preceding claims, wherein the door is configured to be closed manually by a user.

14. The baler according to any of the preceding claims, wherein the baler comprises a press plate configured for compacting the waste.

15. A baler for making bales of a waste material, such as e.g. cardboard or plastic, by compacting the waste material in a chamber, the baler comprising:
- a compaction compartment for containing the waste to be compacted;
- a door being configured for providing access to the compaction compartment;
- a chain configured for moving the door;
- a frame part configured for surrounding at least part of the door and comprising at least one cavity;
- a safety system comprising:
∘ a safety arm configured to be connected to the chain;
∘ a catch connected to the safety arm and configured for moving between;
▪ a first position allowing the door to move; and
▪ a second position preventing the door from moving by engaging into the at least one cavity; and
∘ a spring connected to the safety arm and configured for moving the catch from the first position to the second position when the chain is interrupted.
